# EUROPÄISCHE PATENTSCHRIFT

(11) **EP 3 069 164 B1**
(45) Veröffentlichungstag und Bekanntmachung des Hinweises auf die Patenterteilung: **11.11.2020**
(21) Anmeldenummer: 14777103.4
(22) Anmeldetag: 29.09.2014
(51) Int. Cl.: G01S 15/931, G01S 7/40, G01S 13/931, G01S 7/52, G01S 7/527, G01S 15/10

(54) **VERFAHREN ZUM ERFASSEN EINES FAHRZEUGUMFELDES**
METHOD FOR DETECTING THE SURROUNDING OF A VEHICLE
PROCÉDÉ PERMETTANT DE DÉTECTER L'ENVIRONNEMENT D'UN VÉHICULE

(30) Priorität: 11.11.2013 DE 102013222860
(43) Veröffentlichungstag der Anmeldung: 21.09.2016
(73) Patentinhaber: Robert Bosch GmbH, 70442 Stuttgart (DE)
(72) Erfinder: GOTTLIEB, Stefan, 71282 Hemmingen (DE); KLUEVER, Stefan, 70736 Oeffingen (DE)
(86) Internationale Anmeldenummer: PCT/EP2014/070816
(87) Internationale Veröffentlichungsnummer: WO 2015/067412

(56) Entgegenhaltungen:
- EP-A2- 1 231 453

## Beschreibung

### Stand der Technik

Die Erfindung betrifft ein Verfahren zum Erfassen eines Fahrzeugumfeldes mit Hilfe eines Abstandssensors. Die Erfindung betrifft zudem ein entsprechendes Fahrassistenzsystem und ein Computerprogramm zur Durchführung des Verfahrens.

Fahrassistenzsysteme sind Zusatzeinrichtungen in einem Fahrzeug, die den Fahrer beim Führen des Fahrzeuges unterstützen. Derartige Fahrassistenzsysteme umfassen typischerweise unterschiedliche Subsysteme, wie Fahrerinformationssysteme oder prädikative Sicherheitssysteme. Für verschiedene dieser Subsysteme ist eine Umfeldsensorik erforderlich, die das Umfeld des Fahrzeuges überwacht, um beispielsweise Objekte zu detektieren, die potentielle Hindernisse im Fahrschlauch des Fahrzeuges darstellen.

Üblicherweise erfolgt die Umfelderkennung in einem Fahrzeug mit Abstandssensoren, die basierend auf einem Sendepuls-Echo-Verfahren den Abstand zu Objekten im Umfeld des Fahrzeuges messen und deren Messdaten als Grundlagen für die vom Fahrassistenzsystem zu generierende Reaktion dienen. So werden insbesondere in Parkassistenten Abstandssensoren eingesetzt, die aus der Laufzeit zwischen gesendetem Puls und empfangenem Echo den Abstand zu Hindernissen messen.

Insbesondere in Parksituationen befinden sich Objekte im Nahbereich des Fahrzeuges, die eine kurze Echolaufzeit im Abstandssensor generieren. Beispielsweise ergibt sich bei einer Schallausbreitungsgeschwindigkeit von etwa 300 m/s ein Nachschwingintervall von ca. 1 ms, was wiederrum einer zurückgelegten Wegstrecke des Sendeimpulses von etwa 30 cm entspricht. Befindet sich somit der Abstandssensor in einem Abstand von weniger als 15 cm zu dem Objekt, so trifft das Echosignal vor dem Ende des Nachschwingintervalls auf den Abstandssensor. Die Intensität des Echosignals ist in der Regel schwächer als die Intensität des Sendepulses. Daher ist die Signalintensität des Nachschwingens zumindest zeitweise größer als die Intensität des Echosignals und dementsprechend schwer zu detektieren.

Aus DE 10 2011 016 315 A1 ist ein Verfahren zur Ultraschall-Abstandsmessung bei geringer Objektentfernung bekannt, bei dem ein Ultraschall-Puls ausgesendet wird und reflektierte Echos empfangen werden. Zum Nachweis des Echos wird ausgenutzt, dass das empfangene Echo die Nachschwingungen und deren Amplituden moduliert. Dazu wird die erwartete Phasenlage der Schwingung mit der gemessenen Phasenlage verglichen und bei Abweichungen auf das Vorhandensein eines Echosignals geschlossen.

In DE 10 2011 075 484 A1 ist ein Verfahren zur Reduzierung der minimalen Reichweite eines Ultraschall-Messsystems beschrieben, indem ein Signal ausgesendet wird, dessen Frequenz nicht der Resonanzfrequenz des Ultraschall-Wandlers entspricht. Beim Nachschwingen nähert sich die Frequenz der Nachschwingung der Resonanzfrequenz an. Wird ein Echosignal detektiert, wird über eine Korrelation des Wandlersignals mit dem ursprünglichen Signal bestimmt, ob ein Echosignal empfangen wurde.

DE 10 2005 033 462 A1 betrifft ein Ultraschall-Messverfahren, mit dem sich die Messgeschwindigkeit im Nahbereich erhöhen lässt. Dazu werden die ausgesendeten Signale codiert und beim Empfang eines Echos wird das Echo auf diese Codierung überprüft. Als Codierung können verschiedene Frequenzen, Frequenzsprünge oder Phasensprünge verwendet werden.

Im Stand der Technik ist es bekannt, Modulationen des Signals zu nutzen, um Echosignale im Nachschwingintervall zu detektieren. Derartige Verfahren sind jedoch störanfällig, so dass ein zuverlässiges Detektieren von Echosignalen im Nachschwingintervall nur begrenzt möglich ist. Daher besteht ein anhaltendes Interesse daran, die Detektion von Echosignalen im Nachschwingintervall zu verbessern, um einen erweiterten Naherkennungsbereich bereitzustellen.

### Offenbarung der Erfindung

Erfindungsgemäß wird ein Verfahren zum Erfassen eines Fahrzeugumfeldes mithilfe eines Abstandssensors vorgeschlagen, das folgende Schritte umfasst:
a) Aussenden eines Sendepulses,
b) Erfassen eines Nachschwingsignals in einem Nachschwingintervall,
c) Ermitteln eines Energiewertes durch Integrieren des Nachschwingsignals über einen Zeitabschnitt im Nachschwingintervall,
d) Detektieren von Echosignalen im Nachschwingintervall auf Basis des ermittelten Energiewertes.

Erfindungsgemäß wird weiterhin ein Fahrassistenzsystem zur Umfelderkennung in einem Fahrzeug vorgeschlagen, das folgende Komponenten umfasst:
a. mindestens einen Abstandssensor zum Aussenden eines Sendepulses und zum Erfassen eines Nachschwingsignals in einem Nachschwingintervall,
b. mindestens eine Komponente zum Ermitteln eines Energiewertes durch Integrieren des Nachschwingsignals über einen Zeitabschnitt im Nachschwingintervall,
c. mindestens eine Komponente zum Detektieren von Echosignalen im Nachschwingintervall auf Basis des Energiewertes.

Der Abstandssensor kann im Rahmen der Erfindung sowohl einen Sendepuls aussenden als auch ein Echo empfangen.

Das erfindungsgemäße Verfahren kann im Rahmen einer Laufzeitmessung durchgeführt werden, wobei die Laufzeitmessung mithilfe mindestens eines Abstandssensors durchgeführt wird. Dabei wird der Abstandssensor zunächst angesteuert, Sendepulse auszusenden. Die Ansteuerung kann in einem Fahrassistenzsystem, beispielsweise zentral von einem Steuergerät (Eletronic Control Unit - ECU) oder von einer dem Sensor zugeordneten Elektronikeinrichtung aus erfolgen. Anschließend nach Anregung des Sensors und entsprechender Aussendung des Sendepulses wird der ausgesendete Sendepuls bei Reflektion an einem Objekt als Echos von einem oder mehreren Abstandssensor(en) detektiert. Aus der Laufzeit eines Sendepulses, also aus der Zeit zwischen Senden des Sendepulses und Empfangen des Echos, ergibt sich dann unter Berücksichtigung der Geschwindigkeit des Signals und gegebenenfalls des Fahrzeuges der Abstand zwischen dem Objekt und dem Abstandssensor.

In einer bevorzugten Ausführungsform kommt das Verfahren zur Auswertung von Sensordaten eines Abstandssensors zum Einsatz. Dabei kann der Abstandssensor Teil der Umfeldsensorik eines Fahrassistenzsystems mit unterschiedlichen Subsystemen, etwa einem Einparkassistenten, einer Totwinkelüberwachung oder einem Adaptive-Cruise-Control-System (ACC-System), sein. Die Umfeldsensorik des Fahrassistenzsystems und insbesondere der Abstandssensor überwachen das Fahrzeugumfeld, wobei Ultraschallsensoren, Radarsensoren, Infrarotsensoren, LIDAR-Sensoren oder optische Sensoren eingesetzt werden können. Insbesondere ist der Abstandssensor als Ultraschallsensor ausgebildet, der nach dem Prinzip eines Signal-Echo-Verfahrens den Abstand zu Objekten im Umfeld des Fahrzeuges bestimmt.

Das Nachschwingsignal kann sensorindividuell für einzelne Abstandssensoren und/oder zentral für mehrere Abstandssensoren erfasst werden. So können das Nachschwingsignal und gegebenenfalls vom Abstandssensor empfangene Signale einer sensorindividuellen Einheit, wie einer dem Sensor zugeordneten Elektronikeinrichtung, zugeführt werden und dort weiterverarbeitet werden. Alternativ oder zusätzlich können die Daten einer übergeordneten Einheit, etwa dem zentralen Steuergerät des Fahrassistenzsystems, bereitgestellt werden, wo die Daten weiterverarbeitet werden. Aus den Abstandsinformationen unterschiedlicher Sensoren können weiterhin Objekthypothesen, welche die Abstandsinformationen und Ortsangaben im Umfeld des Fahrzeuges verknüpfen, aufgestellt werden und gegebenenfalls eine Umfeldkarte generiert werden, auf deren Basis beispielsweise weitere Fahrmanöver berechnet werden können.

In einer Implementierung des Verfahrens wird der Energiewert für einen Zeitabschnitt ermittelt, der kleiner ist als das Nachschwingintervall des Abstandssensors und/oder ein Mehrfaches der Abtastrate beträgt. Dabei bezeichnet das Nachschwingintervall des Abstandssensors das Intervall, in dem nach Anregen des Abstandssensors ein Abklingen des Signals stattfindet. Beispielsweise schwingt bei Ultraschallsensoren eine Membran nach Anregung des Ultraschallsensors in Abhängigkeit von einer Dämpfung aus. Somit nimmt die Schwingung im Nachschwingintervall exponentiell mit der Dämpfung ab. Die Abtastrate bezeichnet weiterhin die Rate, mit der das Nachschwingsignal abgetastet wird und dementsprechend in ein zeitdiskretes Signal umgewandelt wird.

Erfindungsgemäß wird ein Modellsignal bereitgestellt und in einem Zeitabschnitt integriert, der dem integrierten Zeitabschnitt des Nachschwingsignals entspricht. Das Modellsignal wird beispielsweise auf Basis der Anfangswerte für das Nachschwingen ermittelt. So wird beim Aussenden des Sendeimpulses ein eingeschwungener, stationärer Zustand im Abstandssensor erreicht und eine bestimmte Energie in der Membran gespeichert. Mit dem Ende der Anregung wird diese Energie durch Nachschwingen abgegeben. Dementsprechend kann ausgehend von dem eingeschwungenen, stationären Zustand die Anfangsamplitude für das Modellsignal ermittelt werden. Das Modellsignal kann dabei einer Exponentialfunktion folgen, welche durch eine Anfangsamplitude und eine Dämpfungskonstante charakterisiert ist. Die Dämpfungskonstante ist bauartbedingt und kann als vorgegebener Wert in einem Speicher hinterlegt sein. Die Integration des Modellsignals erfolgt in einem Zeitabschnitt, der dem integrierten Zeitabschnitt des Nachschwingsignals entspricht. Dazu kann das Modellsignal in ein zeitdiskretes Signal umgewandelt werden, wobei die Abtastrate der des Nachschwingsignals entspricht. Anschließend kann das Modellsignal über einen Zeitabschnitt integriert werden, der im Wesentlichen dem Zeitabschnitt des integrierten Nachschwingsignals entspricht. Im Wesentlichen umfasst hierbei typische Abweichungen, die etwa durch Interpolationen verursacht werden können.

Erfindungsgemäß wird das integrierte Modellsignal mit dem Energiewert des integrierten Nachschwingsignals verglichen. Dabei kann insbesondere eine Differenz zwischen dem Wert des integrierten Modellsignals und dem Energiewert des integrierten Nachschwingsignals ermittelt werden.

Erfindungsgemäß wird ein Echosignal detektiert, wenn der Wert des integrierten Modellsignals vom Energiewert des Nachschwingsignals abweicht. Insbesondere wird ermittelt, ob die Differenz zwischen dem Energiewert des integrierten Modellsignals und dem Energiewert des integrierten Nachschwingsignals größer oder kleiner einem Schwellwert ist. Trifft im Nachschwingintervall ein Echo ein, so unterscheidet sich das Schwingverhalten im Nachschwingintervall vom Modellsignal und führt dadurch zu höheren oder niedrigeren Energiewerten. Ob sich die Energiewerte erhöhen oder erniedrigen hängt von der Phasenlage ab. Bei gleicher Phasenlage erhöht sich der Energiewert des Nachschwingsignals gegenüber dem Energiewert des Modellsignals. Bei invertierter Phasenlage vermindert sich der Energiewert des Nachschwingsignals im Vergleich zum Modellsignal. Hierbei kann der Schwellwert bei Systemapplikation am Fahrzeug ermittelt werden.

Erfindungsgemäß wird das Modellsignal nach Detektieren eines Echosignals neu initialisiert. So kann das Modellsignal nach Erkennen eines Echosignals mit dem aktuellen Wert für die Amplitude als Anfangswert angepasst werden. Dies ermöglicht es, mehrere Echos während des Nachschwingintervalls zu detektieren.

In einer weiteren Implementierung wird das Modellsignal angepasst an Sensorparameter und/oder Umgebungsparameter generiert. Beispielsweise kann das Modell zum Ermitteln des Modellsignals eine Temperaturkompensation oder eine Parameteridentifikation vorsehen. Die Parameteridentifikation ist dabei der eine adaptive Anpassung von Modellparametern an einzelne Sensoren durch Auswertung der Sensorreaktion auf Testimpulse erfolgt. Die Parameteridentifikation kann beispielsweise in einer definierten Umgebung wie z.B. im Rahmen eines Bandentests erfolgen.

Erfindungsgemäß wird weiterhin ein Computerprogramm zur Durchführung eines der hierin beschriebenen Verfahren vorgeschlagen, wenn das Computerprogramm auf einer programmierbaren Computereinrichtung ausgeführt wird. Bei der Computereinrichtung handelt es sich beispielsweise um ein Steuergerät (ECU) zur Implementierung eines Fahrassistenzsystems bzw. eines Subsystems hiervon. Das Computerprogramm kann auf einem maschinenlesbaren Speichermedium gespeichert werden, etwa auf einem permanenten oder wiederbeschreibaren Speichermedium oder in Zuordnung zu einer Computereinrichtung oder auf einer entfernbaren CD-ROM, DVD, Blue-Ray oder einem USB-Stick. Zusätzlich oder alternativ kann das Computerprogramm auf einer Computereinrichtung wie einem Server zum Herunterladen bereitgestellt werden, zum Beispiel über Datennetzwerke wie das Internet, eine Cloud oder eine Kombinationsverbindung wie etwa eine Drahtlosverbindung.

Das erfindungsgemäße Fahrassistenzsystem ist vorzugsweise zur Durchführung des vorstehend beschriebenen Verfahrens ausgebildet. Dabei stellen die einzelnen Komponenten funktionale Komponenten oder Routinen dar, die beispielsweise im Rahmen eines Computerprogramms auf einer elektronischen Einrichtung, wie einer programmierbaren Computereinrichtung, ausgeführt werden. Bei der Computereinrichtung handelt es sich beispielsweise um ein Steuergerät (ECU) zur Implementierung eines Fahrassistenzsystems bzw. eines Subsystems hiervon, wobei mehrere Komponenten in einer oder mehreren ECUs realisiert sein können.

### Vorteile der Erfindung

Die Erfindung ermöglicht es, die Umfelderkennung mit Abstandssensoren zu verbessern. Insbesondere resultiert die Ermittlung des Energiewerts durch Integration des Nachschwingsignals in einer verbesserten und zuverlässigeren Datenverarbeitung. Dadurch stehen qualitativ hochwertig Daten zur Verfügung, die die Systemverfügbarkeit und Robustheit des Fahrassistenzsystems erhöhen.

Durch die Ermittlung des Energiewertes für einzelne Zeitabschnitte im Nachschwingintervall wird der Naherkennungsbereich von Abstandssensoren erweitert. So können Echosignale trotz geringerer Intensität als die des Nachschwingsignals detektiert und ausgewertet werden. Der Energiewert des Nachschwingsignals stellt dabei eine besonders zuverlässige Größe dar, die aufgrund des Integrals über einen Zeitabschnitt wenig störanfällig ist. Damit wird ein Verfahren bereitgestellt, das es ermöglicht, Echosignale im Nachschwingintervall zuverlässig zu identifizieren. Das Verfahren ist zusätzlich stabil, da Fehlerkennungen von Echosignalen aufgrund von Störungen durch die Integration ausgefiltert werden.

Die Erfindung kann besonders vorteilhaft in Parkassistenten eingesetzt werden, um Nahobjekte präziser zu identifizieren, wodurch der Platz in engen Parksituationen besser genutzt werden kann. Vorteilhaft ist auch eine Verwendung in automatischen Parkassistenten, da die Größe der benötigten Parklücke noch weiter reduziert werden kann. Weiterhin kann die Vollwarngrenze für den Fahrer heruntergesetzt werden und dem Fahrer stehen nach Erreichen der Vollwarngrenze genauere Informationen über den verbleibenden Abstand zum Objekt zur Verfügung.

Letztlich kann die Empfindlichkeit und Zuverlässigkeit des Verfahrens dadurch erhöht werden, dass Fertigungstoleranzen und Alterungseffekte des Sensors kompensiert werden können. Zusätzlich kann das Verfahren an Umgebungsbedingungen angepasst werden. Auch die Zeitabschnittsweite, die dem Energiewert zugrunde liegt, kann derart angepasst werden, dass zum einen Störungen im Nachschwingsignal vernachlässigbar sind und zum anderen Echosignale mit einer entsprechenden Auflösung detektiert werden können.

Durch eine neue Initialisierung des Modellsignals können weiterhin mehrere Echos während des Nachschwingintervalls mit hoher Auflösung erkannt werden.

### Kurze Beschreibung der Zeichnungen

Weitere Aspekte und Vorteile der Erfindung werden nunmehr anhand der beigefügten Zeichnungen eingehender beschrieben. Hierbei zeigen:
- Figur 1: ein mit einem erfindungsgemäßen Fahrassistenzsystem ausgerüstetes Fahrzeug in einer beispielhaften Fahrsituation,
- Figur 2: schematisch einen Signalverlauf mit einem Nachschwingintervall und Echosignalen,
- Figur 3: eine Arbeitsweise des Fahrassistenzsystems aus Figur 1 in Form eines Flussdiagramms.

Ähnliche oder funktionell ähnliche Elemente in den Figuren sind mit gleichem Bezugszeichen bezeichnet, sofern nichts Gegenteiliges explizit angegeben ist.

### Ausführungsformen der Erfindung

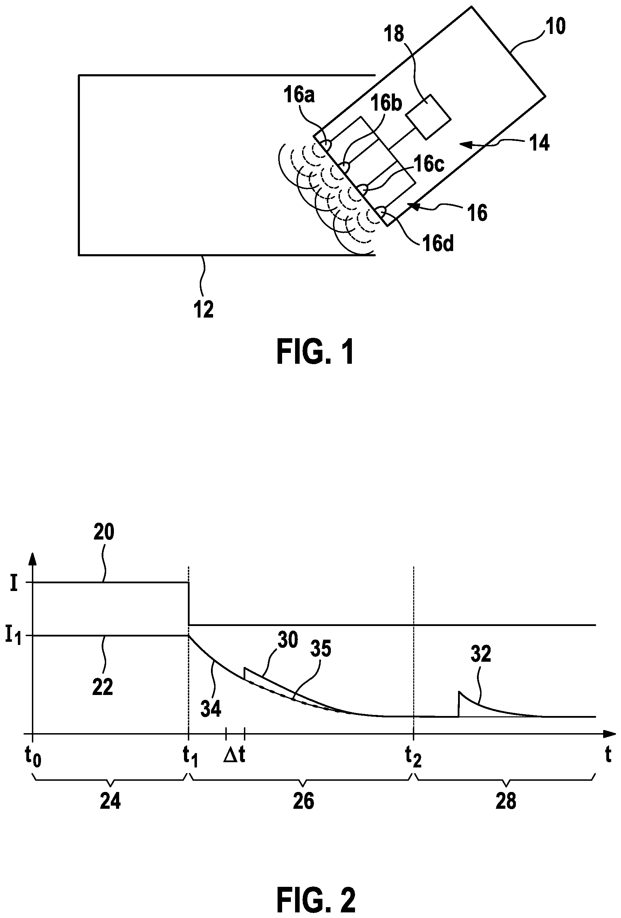

In Figur 1 ist eine schematische Fahrsituation mit einem Fahrzeug 10 gezeigt, das sich beispielsweise in eine Garageneinfahrt oder eine begrenzte Parklücke 12 bewegt. Das Fahrzeug 10 ist mit einem Fahrassistenzsystem 14 ausgerüstet, das ein ultraschallbasiertes Sensorsystem 16 zur Umfeldüberwachung mit Ultraschallsensoren 16a, 16b, 16c, 16d vorne am Fahrzeug 10 umfasst. Gesteuert wird das ultraschallbasierte Sensorsystem 16 von einem Steuergerät (ECU) 18. Neben den in Figur 1 beispielhaft gezeigten Ultraschallsensoren 16a, 16b, 16c, 16d können weitere Ultraschallsensoren seitlich und hinten am Fahrzeug 10 angebracht sein. Zusätzlich können andere Abstandssensoren, wie LIDAR- oder Radarsensoren, zur Laufzeitmessung am Fahrzeug 10 angeordnet sein.

Bei der Anfahrt des Fahrzeuges 10 auf die die Garageneinfahrt oder begrenzte Parklücke 12 senden die vorderen Ultraschallsensoren 16a, 16b, 16c, 16d Ultraschallpulse aus, um den Abstand zwischen dem Fahrzeug 10 und der Begrenzung der Garageneinfahrt oder der Parklücke 12 aus der Laufzeit der Ultraschallpulse zu bestimmen. Dabei kann, wie in Figur 1 dargestellt, eine Situation auftreten, in der das Fahrzeug 10 sich bis auf wenige Zentimeter der Begrenzung der Garageneinfahrt oder Parklücke 12 nähert. In derartigen Situationen kann das Nachschwingen der Ultraschallsensoren 16a, 16b, 16c, 16d dazu führen, dass nach Aussenden des Ultraschallpulses die Ultraschallsensoren 16a, 16b, 16c, 16d quasi blind sind und Echos nicht detektieren können. Dies ergibt sich insbesondere daraus, dass bei Abständen von weniger als 30 cm die Echos in das Nachschwingintervall 26 fallen und aufgrund ihrer geringeren Intensität im Vergleich zum Nachschwingsignal 34, wie in Figur 2 angedeutet, nicht detektiert werden. Daher ist es im Nahbereich der Abstandsmessung, d.h. bei Abständen von weniger als 30 cm, notwendig, Echosignale 30, 32 und das Nachschwingsignal 34 voneinander zu diskriminieren.

In Figur 2 ist schematisch ein beispielhafter, nicht maßstabsgerechter Signalverlauf 22 der von einem Ultraschallsensor 16a, 16b, 16c, 16d gemessenen Signalamplitude I gegen die Zeit t aufgetragen.

Vom Zeitpunkt t₀ bis zum Zeitpunkt t₁ befindet sich der Ultraschallsensor 16a, 16b, 16c, 16d im eingeschwungenen, stationären Zustand, d.h. Sendepulse werden ausgesendet. In diesem Bereich wird eine bestimmte Energie in einer Membran des Ultraschallsensors 16a, 16b, 16c, 16d gespeichert. Mit Ende der Anregung wird diese Energie durch Nachschwingen abgegeben. Das Ende der Anregung ist in Figur 2 durch den Zeitpunkt t₁ gekennzeichnet. Dabei zeigt der Verlauf 20 den Anregungsverlauf des Ultraschallsensors 16a, 16b, 16c, 16d und der Signalverlauf 22 die einhüllende des Schwingverhaltens der Membran des Ultraschallsensors 16a, 16b, 16c, 16d.

Nach einem Sendeintervall 24, das von Zeitpunkt t₀ bis t₁ reicht, folgt ein Nachschwingintervall 26, das von Zeitpunkt t₁ bis t₂ reicht. Im Nachschwingintervall 26 klingt die Schwingung der Membran des Ultraschallsensors 16a, 16b, 16c, 16d exponentiell ab. Dieser exponentielle Abfall beginnt mit einer Anfangsamplitude I₁ und fällt gemäß einer Dämpfungskonstante ab. Die Dämpfungskonstante wird beispielsweise in der Systemapplikation am Fahrzeug ermittelt.

Beispielhaft ist im Nachschwingintervall 26 der Figur 2 ein Echosignal 30 dargestellt, das mit dem Nachschwingsignal 34 des Ultraschallsensors 16a, 16b, 16c, 16d zusammen fällt. Im Vergleich dazu ist in einem Messintervall 28, das auf das Nachschwingintervall 26 zum Zeitpunkt t₂ folgt, ein Echosignal 32 dargestellt, dem keine weiteren Schwingungssignale überlagert sind. Dadurch wird deutlich, dass Echosignale 32 im Messintervall 28 wesentlich leichter detektiert werden können, als Echosignal 30 im Nachschwingintervall 26.

Um dennoch Echosignale 30 im Nachschwingintervall 26 detektieren zu können, wird ein Energiewert durch Integrieren des Nachschwingsignals 34 über einen Zeitabschnitt Δt im Nachschwingintervall 26 ermittelt. Der so ermittelte Energiewert des Nachschwingsignals 34 kann weiterhin mit einem entsprechend berechneten Energiewert eines Modellsignals 35 verglichen werden, das auf Basis der Anfangsparameter, insbesondere der Anfangsamplitude I₁, im Sendeintervall 24 bestimmt wird. Dadurch wird das Detektieren von Echosignalen 30 im Nachschwingintervall 26 auf Basis des Energiewertes des Nachschwingsignals 34 möglich.

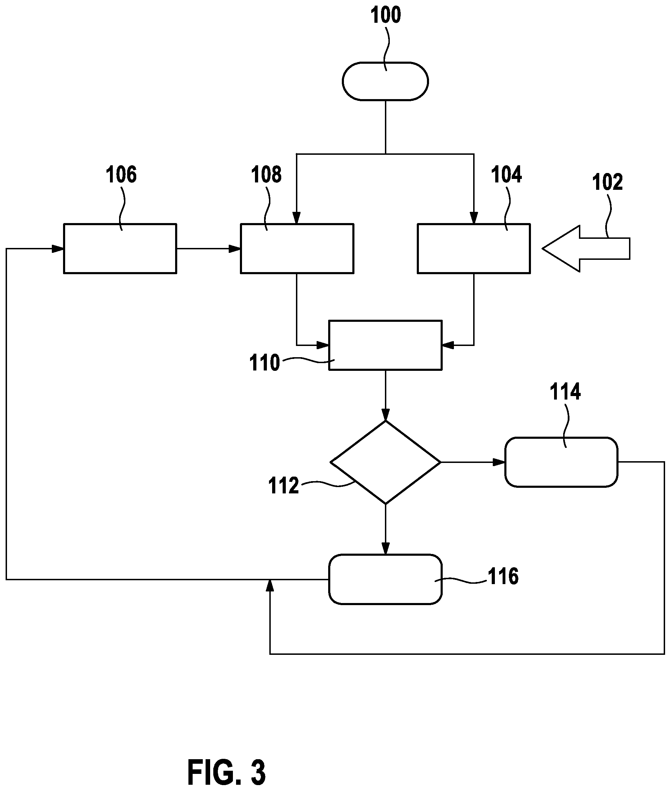

In Figur 3 ist beispielhaft eine Arbeitsweise des erfindungsgemäßen Fahrassistenzsystems 14 gemäß Figur 1 in Form eines Flussdiagramms gezeigt.

In einem ersten Schritt 100 wird das Verfahren zum Erkennen eines Fahrzeugumfeldes aus Sensordaten des Ultraschallsensors 16a, 16b, 16c, 16d initialisiert, nachdem ein Anregungssignal zum Aussenden von Sendepulsen in einem Sendeintervall 24 an den Ultraschallsensor 16a, 16b, 16c, 16d angelegt wurde. Mit Beginn des Nachschwingintervalls 26 zum Zeitpunkt t₁ wird das Nachschwingsignal 34 in einem zweiten Schritt 102 erfasst. In einem dritten Schritt 104 wird ein Energiewert durch Integrieren des Nachschwingsignals 34 über einen Zeitabschnitt Δt im Nachschwingintervall 26 ermittelt. Dazu wird das Nachschwingsignal 34 insbesondere mit einer Abtastrate erfasst und ist damit als zeitdiskretes Signal gegeben. Weiterhin wird der Zeitabschnitt Δt derart gewählt, dass punktuelle Störungen durch die Integration herausgefiltert werden und zum andern an die zu erwartende Länge von Echosignalen 30, 32 angepasst sind, um diese zu erkennen.

In einem vierten Schritt 106 wird ein Modellsignal 35 für das Ausschwingverhalten des Ultraschallsensors 16a, 16b, 16c, 16d erstellt. Dazu wird die Anfangsamplitude I₁ des exponentiellen Verlaufes der Nachschwingung bestimmt und zusammen mit einer Dämpfungskonstante ein Modellsignal 35 ermittelt. In einem fünften Schritt 108 wird das Modellsignal 35 in einem Zeitabschnitt Δt integriert, der den integrierten Zeitabschnitt Δt des Nachschwingsignals 34 entspricht.

In den Schritten 104 und 108 wurden die Energiewerte für das Nachschwingsignal 34 und das Modellsignal 35 bestimmt, aus denen in einem sechsten Schritt 110 eine Differenz ermittelt wird. Weiterhin kann in einem Schritt 112 auf Basis der Differenz bestimmt werden, ob eine Schwelle über- oder unterschritten wurde.

Daraus ergibt sich, dass ein Echosignal 30 erkannt wurde, wenn der Energiewert des integrierten Modellsignals 35 vom Energiewert des Nachschwingsignals 34 abweicht. Ist die Differenz im Schritt 112 also größer einer Schwelle, wird ein Echo erkannt und kann im Schritt 114 weiterverarbeitet werden. Ist die Differenz jedoch geringer als eine vorgegebene Schwelle, so wird kein Echo erkannt und das Verfahren kann in einem Schritt 116 wieder zurückgesetzt werden. Wird ein Echo im Schritt 114 detektiert, kann weiterhin das Modellsignal 35 in einem vierten Schritt 106 neu initialisiert werden. Bei der Generierung des Modellsignals 35 können neben Sensorparametern auch Umgebungsparameter, wie die Umgebungstemperatur, berücksichtigt werden.

Die Erfindung stellt damit ein Verfahren und ein Fahrassistenzsystem 14 bereit, die ein zuverlässiges und robustes Erkennen von Echosignalen 30, 32 im Nachschwingintervall 26 ermöglichen.

## Patentansprüche

1. Verfahren zum Erfassen eines Fahrzeugumfeldes mit Hilfe eines Ultraschallsensors (16a, 16b, 16c, 16d) mit folgenden Schritten:
a) Aussenden (100) eines Sendepulses mittels des Ultraschallsensors (16a, 16b, 16c, 16d),
b) Erfassen (102) eines Nachschwingsignals (34) des Ultraschallsensors (16a, 16b, 16c, 16d) in einem Nachschwingintervall (26),
**gekennzeichnet durch** die Schritte:
c) Ermitteln (104) eines Energiewertes durch Integrieren des Nachschwingsignals (34) über einen Zeitabschnitt im Nachschwingintervall (26) und
d) Detektieren (114, 116) von Echosignalen (30) im Nachschwingintervall (26) auf Basis des ermittelten Energiewertes,
wobei ein Modellsignal (35) des Ultraschallsensors (16a, 16b, 16c, 16d) bereitgestellt wird und in einem Zeitabschnitt integriert wird, der dem integrierten Zeitabschnitt des Nachschwingsignals (34) entspricht,
wobei ein Energiewert des integrierten Modellsignals (35) mit dem Energiewert des integrierten Nachschwingsignals (34) verglichen wird,
wobei das Echosignal (30, 32) detektiert wird, wenn der Energiewert des integrierten Modellsignals (35) vom Energiewert des Nachschwingsignals (34) abweicht, und
wobei das Modellsignal (35) nach Detektieren eines Echosignals (30, 32) initialisiert wird.

2. Verfahren nach Anspruch 1, wobei der Energiewert für einen Zeitschritt ermittelt wird, der kleiner ist als das Nachschwingintervall (26) des Ultraschallsensors (16a, 16b, 16c, 16d).

3. Verfahren nach einem der Ansprüche 1 oder 2, wobei das Modellsignal (35) angepasst an Sensorparameter und/oder Umgebungsparameter generiert wird.

4. Computerprogramm, umfassend Befehle, die bewirken, dass das Fahrerassistenzsystem (14) nach einem der Ansprüche 5-6 die Verfahrensschritte nach einem der Ansprüche 1-3 ausführt.

5. Fahrassistenzsystem (14) zur Umfelderkennung in einem Fahrzeug (10), eingerichtet zur Durchführung eines der Verfahren nach einem der Ansprüche 1 bis 3, mit folgenden Komponenten:
a. mindestens einen Ultraschallsensor (16a, 16b, 16c, 16d) zum Aussenden eines Sendepulses und zum Erfassen eines Nachschwingsignals (34) in einem Nachschwingintervall (26),
b. mindestens eine Komponente zum Ermitteln eines Energiewertes durch Integrieren des Nachschwingsignals (34) über einen Zeitabschnitt im Nachschwingintervall (26),
c. mindestens eine Komponente zum Detektieren von Echosignalen (30, 32) im Nachschwingintervall (26) auf Basis des ermittelten Energiewertes.

6. Fahrassistenzsystem (14) nach Anspruch 5, wobei die Komponenten a, b und c in einem Steuergerät (18) realisiert sind.

## Claims

1. Method for sensing the surroundings of a vehicle using an ultrasonic sensor (16a, 16b, 16c, 16d), comprising the following steps:
a) emitting (100) a transmission pulse by means of the ultrasonic sensor (16a, 16b, 16c, 16d),
b) sensing (102) of a ringing signal (34) of the ultrasonic sensor (16a, 16b, 16c, 16d) in a ringing interval (26),
**characterized by** the steps:
c) determining (104) an energy value by integrating the ringing signal (34) over a time period in the ringing interval (26), and
d) detecting (114, 116) echo signals (30) in the ringing interval (26) on the basis of the determined energy value,
wherein a model signal (35) of the ultrasonic sensor (16a, 16b, 16c, 16d) is made available and integrated in a time period which corresponds to the integrated time period of the ringing signal (34),
wherein an energy value of the integrated model signal (35) is compared with the energy value of the integrated ringing signal (34),
wherein the echo signal (30, 32) is detected if the energy value of the integrated model signal (35) differs from the energy value of the ringing signal (34), and
wherein the model signal (35) is initialized after the detection of an echo signal (30, 32).

2. Method according to Claim 1, wherein the energy value is determined for a time step which is shorter than the ringing interval (26) of the ultrasonic sensor (16a, 16b, 16c, 16d).

3. Method according to either of Claims 1 and 2, wherein the model signal (35) is generated with adaption to sensor parameters and/or ambient parameters.

4. Computer program comprising commands which cause the driver assistance system (14) according to either of Claims 5 and 6 to execute the method steps according to any of Claims 1-3.

5. Driver assistance system (14) for detecting the surroundings of a vehicle (10), configured to carry out one of the methods according to any of Claims 1 to 3, comprising the following components:
a) at least one ultrasonic sensor (16a, 16b, 16c, 16d) for emitting a transmission pulse and for sensing a ringing signal (34) in a ringing interval (26),
b) at least one component for determining an energy value by integrating the ringing signal (34) over a time period in the ringing interval (26), and
c) at least one component for detecting echo signals (30, 32) in the ringing interval (26) on the basis of the determined energy value.

6. Driver assistance system (14) according to Claim 5, wherein the components a, b and c are implemented in a control device (18).

## Revendications

1. Procédé permettant d'acquérir l'environnement d'un véhicule à l'aide d'un capteur à ultrasons (16a, 16b, 16c, 16d), comprenant les étapes suivantes consistant à :
a) envoyer (100) une impulsion d'émission au moyen du capteur à ultrasons (16a, 16b, 16c, 16d),
b) acquérir (102) un signal de post-oscillation (34) du capteur à ultrasons (16a, 16b, 16c, 16d) dans un intervalle de post-oscillation (26),
**caractérisé par** les étapes consistant à :
c) déterminer (104) une valeur énergétique par l'intégration du signal de post-oscillation (34) sur une période de temps dans l'intervalle de post-oscillation (26), et
d) détecter (114, 116) des signaux d'écho (30) dans l'intervalle de post-oscillation (26) sur la base de la valeur énergétique déterminée,
dans lequel un signal type (35) du capteur à ultrasons (16a, 16b, 16c, 16d) est fourni et intégré dans une période de temps qui correspond à la période de temps intégrée du signal de post-oscillation (34),
dans lequel une valeur énergétique du signal type intégré (35) est comparée à la valeur énergétique du signal de post-oscillation intégré (34),
dans lequel le signal d'écho (30, 32) est détecté si la valeur énergétique du signal type intégré (35) dévie de la valeur énergétique du signal de post-oscillation (34), et
dans lequel le signal type (35) est initialisé après la détection d'un signal d'écho (30, 32).

2. Procédé selon la revendication 1, dans lequel la valeur énergétique est déterminée pour un incrément de temps qui est inférieur à l'intervalle de post-oscillation (26) du capteur à ultrasons (16a, 16b, 16c, 16d) .

3. Procédé selon l'une quelconque des revendications 1 à 2, dans lequel le signal type (35) est généré en étant adapté à des paramètres de capteur et/ou à des paramètres d'environnement.

4. Programme informatique, comprenant des instructions qui font que le système d'assistance au conducteur (14) selon l'une quelconque des revendications 5 à 6 exécute les étapes de procédé selon l'une quelconque des revendications 1 à 3.

5. Système d'assistance au conducteur (14) permettant d'acquérir un environnement dans un véhicule (10), conçu pour exécuter l'un des procédés selon l'une quelconque des revendications 1 à 3, comprenant les composants suivants :
a) au moins un capteur à ultrasons (16a, 16b, 16c, 16d) pour envoyer une impulsion d'émission et pour acquérir un signal de post-oscillation (34) dans un intervalle de post-oscillation (26),
b) au moins un composant pour déterminer une valeur énergétique par l'intégration du signal de post-oscillation (34) sur une période de temps dans l'intervalle de post-oscillation (26),
c) au moins un composant pour détecter des signaux d'écho (30, 32) dans l'intervalle de post-oscillation (26) sur la base de la valeur énergétique déterminée.

6. Système d'assistance au conducteur (14) selon la revendication 5, dans lequel les composants a, b et c sont réalisés dans un appareil de commande (18).
